Europäisches Patentamt

European Patent Office

Office européen des brevets

(11) Publication number: **0 470 257 A1**

## EUROPEAN PATENT APPLICATION
### published in accordance with Art. 158(3) EPC

(21) Application number: **91903609.5**

(22) Date of filing: **06.02.91**

(86) International application number:
**PCT/JP91/00147**

(87) International publication number:
**WO 91/12935 (05.09.91 91/21)**

(30) Priority: **28.02.90 JP 48930/90**

(43) Date of publication of application:
**12.02.92 Bulletin 92/07**

(84) Designated Contracting States:
**DE**

(51) Int. Cl.⁵: **B25J 13/00**

(71) Applicant: **FANUC LTD.**
**3580, Shibokusa Aza-Komanba, Oshino-mura**
**Minamitsuru-gun, Yamanashi 401-05(JP)**

(72) Inventor: **SUGIMURA, Hiroshi, Fanuc Mansion**
**Harimomi 5-302**
**3536, Shibokusa, Oshinomura,**
**Minamitsuru-gun**
**Yamanashi 401-05(JP)**
Inventor: **FURUKAWA, Yoshihisa, Fanuc**
**Mansion Harimomi 8-309**
**3511-1, Shibokusa, Oshinomura,**
**Minamitsuru-gun**
**Yamanashi 401-05(JP)**

(74) Representative: **Brunner, Michael John et al**
**GILL JENNINGS & EVERY 53-64 Chancery**
**Lane**
**London WC2A 1HN(GB)**

(54) **CALIBRATION SYSTEM FOR ROBOT.**

(57) A calibration system for a robot, wherein an off-line program prepared on an off-line program device is converted into an actual motion program for the robot. Four points (Pr, i) not present on the same plane on a work are determined as coordinate values of a base coordinate system of the robot by a coordinate reading means (21) through a touch-up technique. A transforming matrix (T) for transforming coordinate values of a work coordinate system and an attitude into those of a base coordinate system is prepared by an operation means (22) from points (Pw, i) which are on a reference coordinate system of the work, correspond to the four points (Pr, i) of the work and are set by the off-line program (11). Using this transforming matrix (T), a program conversion means (23) converts the off-line program (11) into a motion program (24). With this arrangement, all of the errors such as a geometric parameter error of the robot, an error in position of the work and the like are corrected.

11 OFF-LINE PROGRAM

10 OFF-LINE PROGRAMMING APPARATUS

$P_{w,i}$

12

20 ROBOT CONTROLLING APPARATUS

22 CALCULAT-ING MEANS

21 COORDINATE READING MEANS

$a = Q^{-1}[P_{r,i}]$

$P_{r,i} = TP_{w,i}$

$P_{r,i}$

T (4 x 4)

MOTION PROGRAM

23 PROGRAM CONVERTING MEANS

24

F i g .  1

## Technical Field

The present invention relates to a robot calibration system for converting an off-line program produced with an off-line programming apparatus into a motion program for an actual robot, and more particularly to a robot calibration system for simply correcting errors including an error caused by geometric parameters of a robot, an error with respect to the location of a workpiece to be processed by the robot, etc.

## Background Art

Robots for use on large-scale production lines such as automobile welding lines or the like require off-line programs in order to shorten the time needed to initially activate the lines. Generally, an off-line program produced with an off-line programming apparatus cannot directly be used as a motion program for a robot. It is necessary to correct various errors including an error caused by geometric parameters of a robot, an error with respect to the location of a workpiece to be processed by the robot, etc.

It is highly costly to correct these errors individually. Errors which occur due to various causes may be regarded as errors of the working coordinate system of a robot.

It has been customary to correct such working coordinate system errors by determining three points on a workpiece with a touch-up, determining a coordinate transformation matrix represented by a homogeneous transformation matrix based on the determined points, and converting points or orientation on an off-line program with the coor dinate transformation matrix.

However, since the three-point touch-up induces large touch-up errors, the coordinate transformation matrix contains large measurement errors. In addition, use of the homogeneous transformation matrix as the coordinate transformation matrix is ineffective to correct errors such as errors caused by geometric parameters of a robot.

## Disclosure of the Invention

In view of the aforesaid drawbacks of the conventional robot systems, it is an object of the present invention to provide a robot calibration system which is capable of effecting a touch-up simply with high accuracy.

Another object of the present invention to provide a robot calibration system which can correct a variety of errors including errors caused by geometric parameters of a robot.

To achieve the above objects, there is provided in accordance with the present invention a robot calibration system for converting an off-line program produced with an off-line programming apparatus into a motion program for an actual robot, comprising coordinate reading means for reading, by way of a touch-up, at least four points on a workpiece which do not lie on one plane, as coordinates on a base coordinate system of the robot, calculating means for determining a transformation matrix which converts coordinates and orientation on a reference coordinate system of the workpiece into the base coordinate system, from points on the reference coordinate system of the workpiece which correspond to the points on the workpiece and are established by the off-line program, and program converting means for converting the off-line program into the motion program according to the transformation program.

At least four points, which do not lie on the same plane, measured on the base coordinate system of the robot, and corresponding four points on the base coordinate system of the workpiece which are established by the off-line program, are used to convert the points and orientation in the off-line program into those in the motion program. The off-line program is converted into the motion program by the transformation matrix. The conversion compensates all errors including an error caused by the geometric parameters of the robot, and an error with respect to the position of the workpiece.

## Brief Description of the Drawings

FIG. 1 is a block diagram of a robot calibration system according to an embodiment of the present invention; and
FIG. 2 is a perspective view, partly in block form, of the robot calibration system in its entirety.

## Best Mode for Carrying Out the Invention

An embodiment of the present invention will hereinafter be described with reference to the drawings.

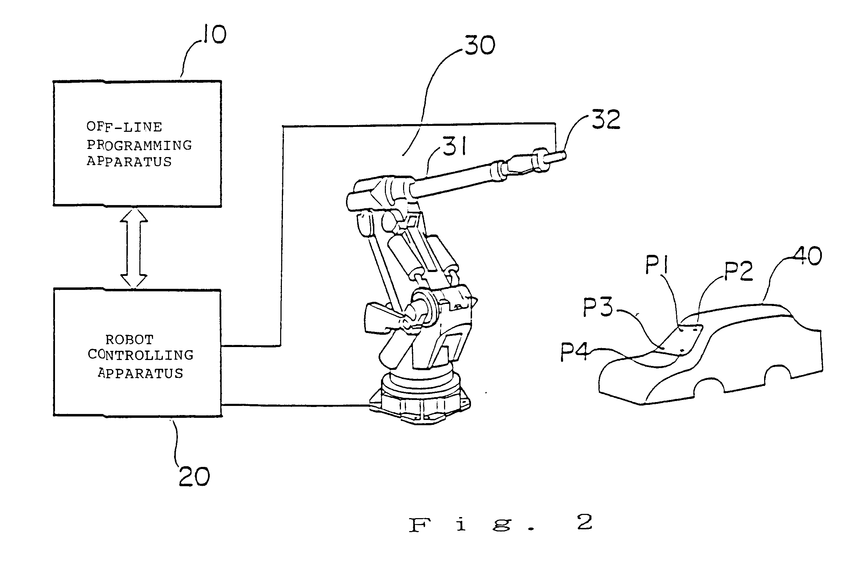

FIG. 2 shows an entire robot calibration system according to the present invention. The robot calibration system includes an off-line programming apparatus 10 for producing an off-line program for a robot 30 on an off-line basis. The off-line programming apparatus 10 may generally be a work station, a personal computer, or the like.

A robot controlling apparatus 20 comprises a microprocessor for energizing servomotors of the robot 30 to operate the robot 30 according to a motion program. The robot 30 has an arm 31 with a touch-up sensor 32 mounted on its distal end. The touch-up sensor 32 may comprise a proximity switch, an electrostatic-capacitance switch, or the like.

The robot controlling apparatus 20 controls the robot 30 to cause the touch-up sensor 32 to touch four points P1 ~ P4 on a workpiece 40 which do not lie on a common plane within a working area. When the touch-up sensor 32 touch the four points P1 ~ P4, the robot controlling apparatus 20 reads their coordinates on the base coordinate system of the robot 30.

A transformation matrix for converting an off-line program into a motion program is determined as follows:

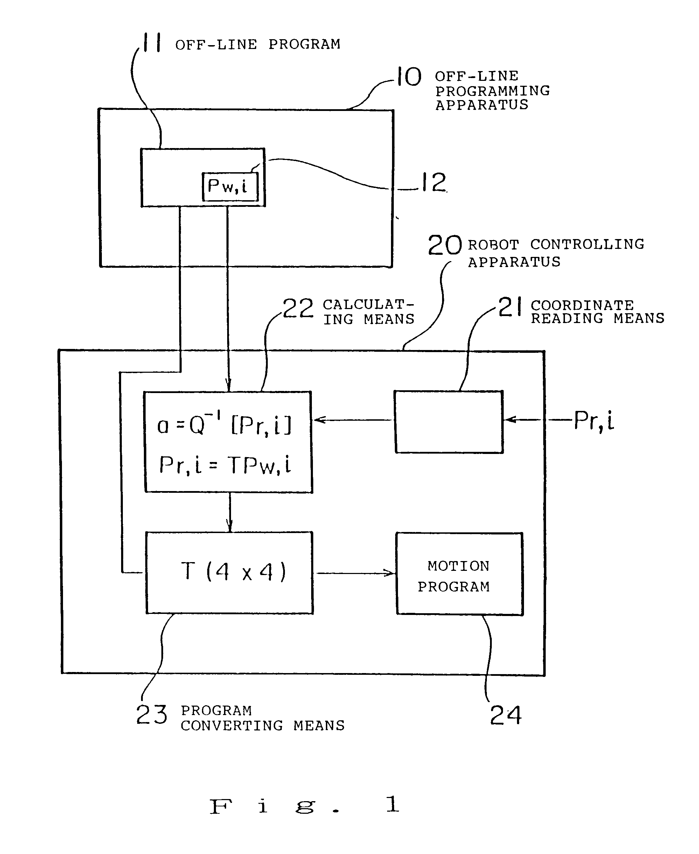

FIG. 1 shows in block form the robot calibration system in detail.

The off-line programming apparatus 10 establishes a reference coordinate system for the workpiece 40, and sets up coordinates of a touch-up point Pw,i on the reference coordinate system. Of the reference characters Pw,i, the suffix w represents the workpiece coordinate system, and the suffix i the number of a touch-up point. At least four touch-up points which do not lie on one plane are needed. If necessary, data of a touch-up jig is prepared. An off-line program is generated on the reference coordinate system.

Now, a touch-up process is carried out. A point on the workpiece 40 which corresponds to the touch-up point Pw,i is touched by the touch-up sensor 32 . The point Pr,i which is actually touched by the touch-up sensor 32 is read by a coordinate reading means 21 of the robot controlling apparatus 20. More specifically, when the point Pr,i is touched by the touch-up sensor 32, its coordinates on the base coordinate system of the robot 30 are read by the coordinate reading means 21.

The coordinates of the touched point Pr,i are sent from the coordinate reading means 21 to a calculating means 22 for determining a transformation matrix T. More specifically, a touch-up point n on the reference coordinate system of the workpiece on the off-line program is indicated by:

$$Pw,i = [x_{w,i}, y_{w,i}, z_{w,i}, 1]^T$$
$$(i = 1, 2, n )    (1).$$

A point Pr,i, which corresponds to the point Pw,i, on the robot base coordinate system, touched by the touch-up sensor 32, is indicated by:

$$Pr,i = [x_{r,i}, y_{r,i}, z_{r,i}, 1]T$$
$$(i = 1, 2, n)    (2).$$

If a transformation matrix for converting the point Pw,i into the point Pr,i is indicated by T (4 4), then the point Pr,i is given as follows:

$$Pr,i = T \cdot zP_{w,i} (i = 1, 2, n)    (3).$$

The transformation matrix T is represented as follows:

$$T = \begin{bmatrix} n_x & o_x & a_x & x_o \\ n_y & o_y & a_y & y_o \\ n_z & o_z & a_z & z_o \\ 0 & 0 & 0 & 1 \end{bmatrix} \quad \dots (4)$$

From the equation (3), there are determined 3n equations with respect to the parameters of the transformation matrix T. When n = 4, the parameters of the transformation matrix T are uniquely determined from the equations. When n > 4, the parameters of the transformation matrix T are estimated according to the method of least squares.

The coordinates of the off-line program, denoted at 11, and its orientation can be converted into the motion program, denoted at 24, by a program converting means 23 which has the transformation matrix T.

Since the transformation contains errors due to the geometric parameters of the robot, and errors about the location and orientation of the workpiece, the off-line program 11 can simply be converted accurately into the motion program 24 without taking individual errors into account.

In the above description, the calculation of the transformation matrix, and the conversion of the off-line program into the motion program are executed in the robot controlling apparatus. However, they may be carried out on the spot using a hand-held personal computer or the like, thus lessening the burden on the robot controlling apparatus. Alternatively, the calculation of the transformation matrix, and the conversion of the off-line program into the motion program may be effected in the off-line programming apparatus.

Four points that do not lie on the same plane are enough for each of the points Pw,i, Pr,i. If there are more points involved, however, the parameter a may be determined according to the method of least squares.

With the present invention, as described above, the transformation matrix is determined by touching the workpiece at least four points that do not lie on the same plane, and the off-line program is converted into the motion program with the determined transformation matrix. Therefore, the motion program can simply be produced from the off-line program. Consequently, the teaching process for the robot may be simplified, the time required to initially activate a line combined with the robot calibration system may be shortened, and the personnel needed to teach the robot may be reduced.

## Claims

1. A robot calibration system for converting an off-line program produced with an off-line programming apparatus into a motion program for an actual robot, comprising:

   coordinate reading means for reading, by way of a touch-up, at least four points on a workpiece which do no lie on one plane, as coordinates on a base coordinate system of the robot;

   calculating means for determining a transformation matrix which converts coordinates and orientation on a reference coordinate system of the workpiece into said base coordinate system, from points on the reference coordinate system of the workpiece which correspond to said points on the workpiece and are established by the off-line program; and

   program converting means for converting said off-line program into said motion program according to said transformation matrix.

2. A robot calibration system according to claim 1, wherein said coordinate reading means comprises a sensor mounted on a distal end of an arm of the robot.

3. A robot calibration system according to claim 1, wherein there are five or more touch-up points on the workpiece which are to be read by said coordinate reading means, and elements of said transformation matrix are determined by the method of least squares.

4. A robot calibration system according to claim 1, further including a robot controlling apparatus for controlling the robot, said calculating means and said program converting means being included in said robot controlling apparatus.

5. A robot calibration system according to claim 1, wherein said calculating means and said program converting means are included in the off-line programming apparatus.

6. A robot calibration system according to claim 1, further including a hand-held personal computer, said calculating means and said program converting means being included in said hand-held personal computer.

5

$\text{II}$ OFF-LINE PROGRAM

$\text{IO}$ OFF-LINE
PROGRAMMING
APPARATUS

$Pw,i$

$\text{I2}$

$2\text{O}$ ROBOT CONTROLLING
APPARATUS

$22$ CALCULAT-
ING MEANS

$2\text{I}$ COORDINATE
READING MEANS

$a = Q^{-1} [Pr,i]$

$Pr,i = TPw,i$

$\longleftarrow$ $Pr,i$

$T (4 \times 4)$

MOTION
PROGRAM

$23$ PROGRAM
CONVERTING MEANS

$24$

F i g .  1

F i g . 2

# INTERNATIONAL SEARCH REPORT

International Application No PCT/JP91/00147

| **I. CLASSIFICATION OF SUBJECT MATTER** (if several classification symbols apply, indicate all) [6] |
|---|

According to International Patent Classification (IPC) or to both National Classification and IPC

Int. Cl$^5$  B25J13/00

| **II. FIELDS SEARCHED** |
|---|

**Minimum Documentation Searched** [7]

| Classification System | Classification Symbols |
|---|---|
| IPC | B25J9/10, 9/22, 13/00 |

**Documentation Searched other than Minimum Documentation**
**to the Extent that such Documents are Included in the Fields Searched** [8]

| | |
|---|---|
| Jitsuyo Shinan Koho | 1926 - 1991 |
| Kokai Jitsuyo Shinan Koho | 1971 - 1991 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 62-200403 (Komatsu Ltd.), September 4, 1987 (04. 09. 87), (Family: none) | 1-6 |
| Y | JP, A, 62-139003 (Mitsubishi Electric Corp.), June 22, 1987 (22. 06. 87), (Family: none) | 1-6 |
| Y | JP, A, 62-218808 (Tokyo Boeki K.K.), September 26, 1987 (26. 09. 87), (Family: none) | 2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use. exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

| **IV. CERTIFICATION** | |
|---|---|
| Date of the Actual Completion of the International Search | Date of Mailing of this International Search Report |
| April 22, 1991 (22. 04. 91) | May 13, 1991 (13. 05. 91) |
| International Searching Authority | Signature of Authorized Officer |
| Japanese Patent Office | |

Form PCT/ISA/210 (second sheet) (January 1985)